# EUROPÄISCHE PATENTSCHRIFT

(11) **EP 2 448 801 B1**
(45) Veröffentlichungstag und Bekanntmachung des Hinweises auf die Patenterteilung: **13.08.2014**
(21) Anmeldenummer: 10726968.0
(22) Anmeldetag: 24.06.2010
(51) Int. Cl.: B60T 17/00, B01D 53/26

(54) **LUFTTROCKNERPATRONE FÜR EINE DRUCKLUFTAUFBEREITUNGSANLAGE EINES FAHRZEUGS**
AIR DRYER CARTRIDGE FOR A COMPRESSED AIR TREATMENT SYSTEM OF A VEHICLE
CARTOUCHE À DESSICCATEUR D'AIR POUR INSTALLATION DE PRÉPARATION D'AIR COMPRIMÉ D'UN VÉHICULE

(30) Priorität: 29.06.2009 DE 102009030897
(43) Veröffentlichungstag der Anmeldung: 09.05.2012
(73) Patentinhaber: KNORR-BREMSE Systeme für Nutzfahrzeuge GmbH, 80809 München (DE)
(72) Erfinder: EIDENSCHINK, Rainer, 81927 München (DE); SCHÄBEL, Stefan, 80804 München (DE)
(74) Vertreter: Mattusch, Gundula
(86) Internationale Anmeldenummer: PCT/EP2010/058980
(87) Internationale Veröffentlichungsnummer: WO 2011/000766

(56) Entgegenhaltungen:
- EP-A1- 1 878 962
- EP-A2- 0 733 844
- EP-A2- 2 140 924
- DE-A1- 19 955 898

## Beschreibung

Die Erfindung betrifft eine Lufttrocknerpatrone für eine Druckluftaufbereitungsanlage eines Fahrzeugs, insbesondere eines Nutzfahrzeugs, mit einem Federdeckel und einem Trägerelement, die gemeinsam im zusammengebauten Zustand der Lufttrocknerpatrone ein Volumen der Lufttrocknerpatrone definieren wobei eine innerhalb des Volumens angeordnete, mit einem Trockenmittel gefüllte Trockenmittelbox vorgesehen ist, und wobei der Federdeckel und das Trägerelement als im Wesentlichen einseitig geschlossene Zylinder ausgeführt sind, an dessen offenen Enden Mittel beziehungsweise weitere Mittel zum Herstellen der Schnappverbindung angeordnet sind, über die der Federdeckel und das Trägerelement koppelbar sind.

Die Erfindung betrifft weiterhin eine Druckluftaufbereitungsanlage für ein Fahrzeug, insbesondere ein Nutzfahrzeug, mit einer erfindungsgemäßen Lufttrocknerpatrone.

Lufttrocknerpatronen werden als Verschleißteile im Rahmen der Druckluftbereitstellung beziehungsweise -aufbereitung für Druckluftaufbereitungsanlagen, kurz EAC, insbesondere im Nutzfahrzeugbereich benötigt. Dort werden sie zur Reinigung erzeugter Druckluft von Öl- und Schmutzpartikeln und zur Trocknung der Druckluft eingesetzt.

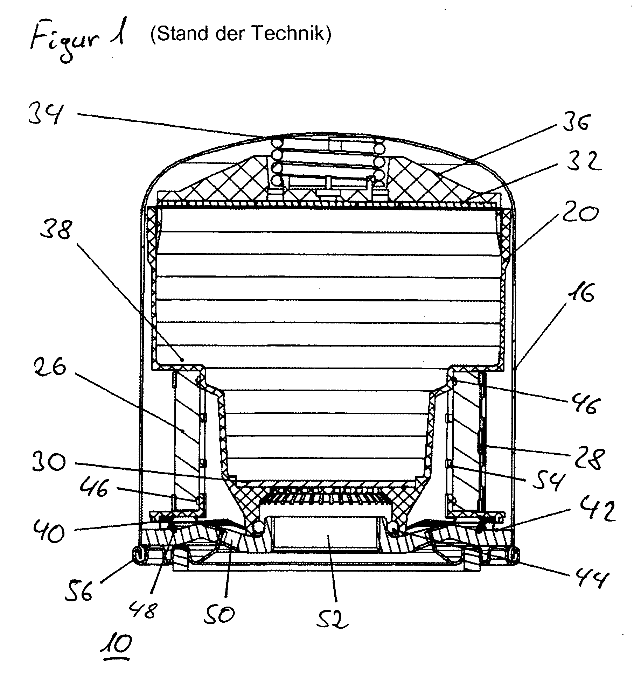

Eine aus dem Stand der Technik bekannte Lufttrocknerpatrone ist in Figur 1 dargestellt. Die gezeigte Lufttrocknerpatrone 10 besteht im Wesentlichen aus einer mit einem Trockenmittel 38 gefüllten Trockenmittelbox 20, die in einem Federdeckel 16 angeordnet ist. Der Federdeckel 16 wird im unteren Bereich von einer Bodenplatte 42 mit einem Lufteinlass 50 und einem Luftauslass 52 verschlossen. Die Bodenplatte 42 und der Federdeckel 16 sind über eine Bördelnaht 56 fest miteinander verbunden. Zwischen der Bodenplatte 42 und der Trockenmittelbox 20 dichten ein O-Ring 44 und ein Dichtring 40 mit einer Gummilippe 48, wobei die Gummilippe 48 als ein Rückschlagventil arbeitet. Der Dichtring 40 ist mechanisch oder chemisch mit der Trockenmittelbox 20 verbunden, wobei die Gummilippe 48 eine definierte Öffnungs- und Schließcharakteristik aufweist. Insbesondere öffnet die Gummilippe 48 bei einem Überdruck in der Lufttrocknerpatrone 10 und wirkt somit als Sicherheitsventil. Die Trockenmittelbox 20 ist in ihrer axialen Erstreckungsrichtung von einem ersten Luftfilter 30 und einem zweiten Luftfilter 32 begrenzt, welche das Trockenmittel 38 im Inneren der Trockenmittelbox 20 zurückhalten. Im oberen Bereich der Lufttrocknerpatrone 10 ist weiterhin eine Druckfeder 34 und ein Granulatdeckel 36 vorgesehen, über die das Trockenmittel 38 im Inneren der Trockenmittelbox 20 komprimiert wird. Der Granulatdeckel 36 ist insbesondere luftdurchlässig ausgeführt. Ein Kombinationsfilter, zum Beispiel in Form eines Koaleszenzfilters 26 erstreckt sich in axialer Richtung um die untere Hälfte der Trockenmittelbox 20 und wird in radialer Richtung von einer Manschette 28 an einer Tragekonstruktion 54 der Trockenmittelbox 20 fixiert. Das Koaleszenzfilter 26 unterteilt die Lufttrocknerpatrone 10 in einen Vorfilterbereich und einen Nachfilterbereich. Aufgabe des Koaleszenzfilters 26 während einer Druckluftförderphase ist es, Öl- und Schmutzpartikel sowie Emulsionströpfchen an einer Anströmfläche festzuhalten, flüssiges Öl zu speichern und feinste Öltröpfchen und Aerosole durch einen Koaleszenzeffekt in flüssiges Öl umzuwandeln und abzuscheiden. Die Auslegung von Ausströmfläche und Filteraufbau bewirkt dabei ein definiertes Verhältnis von Luftausströmgeschwindigkeit und Öltröpfchengröße. Dieses Verhältnis garantiert, dass keine Öltröpfchen über den Nachfilterbereich in die Trockenmittelbox 20 gelangen und so die Lebensdauer der Lufttrocknerpatrone 10 und nachgeordneter Verbraucher verkürzen. Luftleitelemente 46 ragen in radialer Richtung von der Trockenmittelbox 20 ausgehend in das Koaleszenzfilter 26 hinein und vermeiden eine Umgehung des Koaleszenzfilters durch einströmende Luft. Die Abdichtung während einer Druckluftförderphase zwischen Vorfilterbereich und Nachfilterbereich wird also durch eine spezielle Abdichtgeometrie, bestehend aus Luftleitelementen 46 in Verbindung mit der außenliegenden Manschette 28 erreicht.

Das Koaleszenzfilter 26 wird in azimutaler Richtung um die Trockenmittelbox 20, insbesondere auf die luftdurchlässige Tragekonstruktion 54, die Teil der Trockenmittelbox 20 ist, gewickelt. Dabei bildet das Filtermaterial des Koaleszenzfilters 26 zumindest eine Filterschicht in radialer Richtung. Die Manschette 28, die beispielsweise als eine elastische Gummimanschette ausgebildet sein kann, fixiert das Filtermaterial des Koaleszenzfilters 26 in radialer Richtung. Gleichzeitig erlaubt die Manschette 28 ein Atmen des Koaleszenzfilters 26 während der Ablagerung von Öl-und Schmutzpartikeln innerhalb des Filtermaterials und schützt das Koaleszenzfilter 26 vor Zerstörung. Das Filtermaterial des Koaleszenzfilters 26 grenzt direkt an die Trockenmittelbox 20.

Weiterhin ist aus der EP 0 230 991 A2 eine Lufttrocknerpatrone bekannt, bei der die Gehäuseteile der Lufttrocknerpatrone durch eine einen Sprengring umfassenden Schnappverbindung miteinander verbunden sind.

Aus der US 4,838,901 A und der DE 198 27 566 A1 ist darüber hinaus jeweils ein Luftfilter bekannt, dessen Gehäuse mit zumindest einem flexiblen Paar aus "shoulders and posts" verschlossen ist beziehungsweise mithilfe einer Schnappverbindung zusammengefügt wurde.

DE 199 55 898 A1 offenbart eine Trockenmittelbox zum Entfeuchten von Druckluftbremsanlagen. Die Trockenmittelbox umfasst ein Gehäuse mit einem Ein- und Auslass, wobei das Gehäuse von einem Behälter und einem Flansch gebildet ist. Weiterhin weist die Trockenmittelbox einen Trockenmittelkörper auf, der formstabil in das Gehäuse eingebracht ist. Durch die formstabile Ausführung des Trockenmittelkörpers können Bauteile, die zur Fixierung des granulatförmigen Trockenmittels erforderlich sind, eingespart werden.

Hiervon ausgehend liegt der vorliegenden Erfindung die Aufgabe zugrunde, den Aufbau einer Lufttrocknerpatrone zu vereinfachen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Lufttrocknerpatrone dadurch auf, dass die Mittel zum Herstellen der Schnappverbindung an dem Federdeckel von den weiteren Mitteln zum Herstellen der Schnappverbindung an dem Trägerelement senkrecht zu einer axialen Richtung beidseitig umfasst werden. Durch das beidseitige Umfassen erhält die Schnappverbindung eine ausreichende Dichtheit, so dass auf eine zusätzliche Dichtung zwischen dem Federdeckel und dem Trägerelement zur Abdichtung des Gehäuses der Lufttrocknerpatrone verzichtet werden kann. Zwischen dem Federdeckel und dem Trägerelement werden alle Teile der Lufttrocknerpatrone, insbesondere die notwendigen Teile, eingespannt. Die Teile der Lufttrocknerpatrone können, zum Beispiel einen Granulatdeckel, eine Druckfeder, eine Trockenmittelbox, Luftfilter in Form von Filtervlies, Trockenmittel, ein Rückschlagventil und einen kleinen O-Ring umfassen. Der kompakte Patroneneinsatz kann leicht als Einheit aus der Druckluftaufbereitungsanlage entnommen und ausgetauscht werden. Die lösbare Schnappverbindung erlaubt eine Wiederverwendung des Federdeckels, des Trägerelementes und weiterer Teile der Lufttrocknerpatrone, während verschlissene Bestandteile, insbesondere das Trockenmittel und Filtervliese, ausgetauscht werden können.

Vorzugsweise kann vorgesehen sein, dass ein Koaleszenzfilter auf die Trockenmittelbox gewickelt und von einer Manschette fixiert ist. Das Aufwickeln des Koaleszenzfilters auf die Trockenmittelbox ermöglicht die Einsparung einer von der Trockenmittelbox separaten Trägervorrichtung, die das Koaleszenzfilter abseits der Trockenmittelbox innerhalb der Lufttrocknerpatrone positioniert.

Besonders bevorzugt ist, dass an einem oberen und an einem unteren Ende der Trockenmittelbox Luftfilter angeordnet sind. Durch die Luftfilter kann das im Inneren der Trockenmittelbox vorhandene Trockenmittel am Verlassen der Trockenmittelbox gehindert werden.

Es kann vorgesehen sein, dass ein durch eine Druckfeder gegenüber dem Federdeckel verspannter Granulatdeckel das Trockenmittel in der Trockenmittelbox fixiert. Auf diese Weise kann das üblicherweise als Granulat in der Trockenmittelbox vorliegende Trockenmittel in einer möglichst dichten Packung gehalten werden, wobei durch natürlichen Verschleiß auftretende Trockenmittelverluste durch eine Verkleinerung des zur Verfügung gestellten Volumens ausgeglichen werden können, um die dichte Packung zu erhalten.

Weiterhin kann vorgesehen sein, dass das Trägerelement und die Trockenmittelbox einstückig gefertigt sind. Dies ermöglicht eine "direkte" Kopplung des Federdeckels mit der Trockenmittelbox ohne weitere Bauteile, so dass der Aufbau der Lufttrocknerpatrone insgesamt vereinfacht wird.

Vorteilhafterweise kann vorgesehen sein, dass vor dem Befüllen der Trockenmittelbox mit Trockenmittel an einem unteren Ende der Trockenmittelbox ein erster Luftfilter angeordnet wird, und dass nach dem Befüllen der Trockenmittelbox mit Trockenmittel an einem oberen Ende der Trockenmittelbox ein zweiter Luftfilter angeordnet wird.

Weiterhin kann vorgesehen sein, dass das Trockenmittel durch einen über eine Druckfeder gegenüber dem Federdeckel verspannten Granulatdeckel in der Trockenmittelbox fixiert wird.

Es kann auch vorgesehen sein, dass das Trägerelement und die Trockenmittelbox einstückig gefertigt werden.

Die Erfindung wird nun mit Bezug auf die begleitenden Zeichnungen anhand einer besonders bevorzugten Ausführungsform beispielhaft erläutert.

Es zeigen:
- Figur 1: eine Lufttrocknerpatrone gemäß dem Stand der Technik;
- Figur 2: eine schematische Darstellung eines Fahrzeugs mit einer einen Lufttrockner mit Lufttrocknerpatrone umfassenden Durckluftaufbereitungsanlage; und
- Figur 3: eine geschnittene Darstellung einer erfindungsgemäßen Lufttrocknerpatrone.

In den folgenden Zeichnungen bezeichnen gleiche Bezugszeichen gleiche oder gleichartige Teile.

Figur 1 zeigt eine Lufttrocknerpatrone 10 gemäß dem Stand der Technik, deren Aufbau bereits beschrieben wurde.

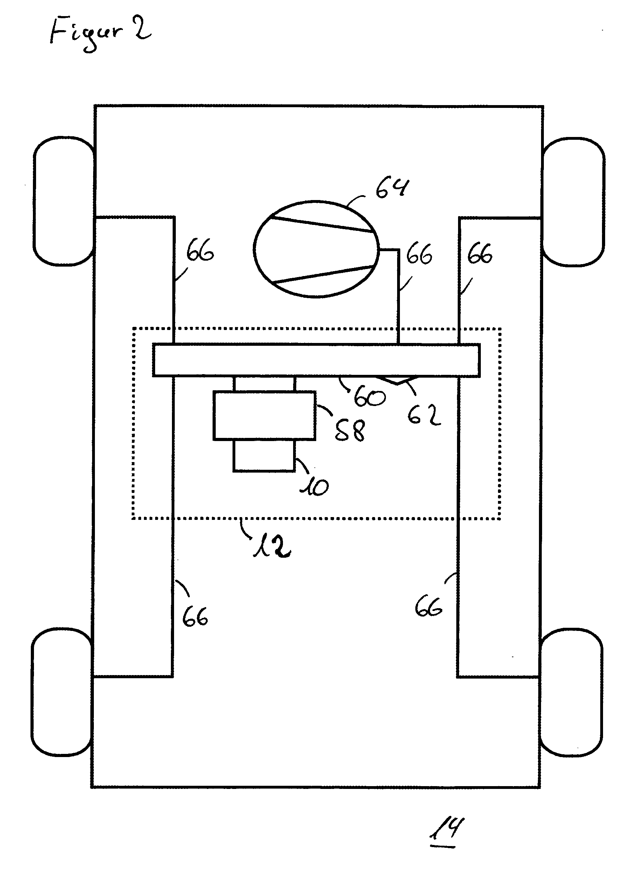

Figur 2 zeigt eine schematische Darstellung eines Fahrzeugs 14 mit einer einen Lufttrockner 58 mit Lufttrocknerpatrone 10 umfassenden Durckluftaufbereitungsanlage 12. Die Druckluftaufbereitungsanlage 12 erhält komprimierte Luft von einem Kompressor 64 und verteilt die aufbereitete Druckluft über Druckluftleitungen 66 an einzelne Verbraucher. Zu diesem Zweck ist eine verschiedene Ventile umfassende Ventileinrichtung 60 mit einer Entlüftung 62 vorgesehen, die von einem nicht dargstellten Steuergerät angesteuert werden kann. Die Ventileinrichtung 60 kann beispielsweise einen Druckregler und ein Mehrkreisschutzventil umfassen. Schematisch vereinfacht dargstellt sind in Figur 2 als Verbraucher Bremszylinder einer druckluftbetriebenen Bremsanlage ohne die notwendigen Ansteuerungsmöglichkeiten angedeutet.

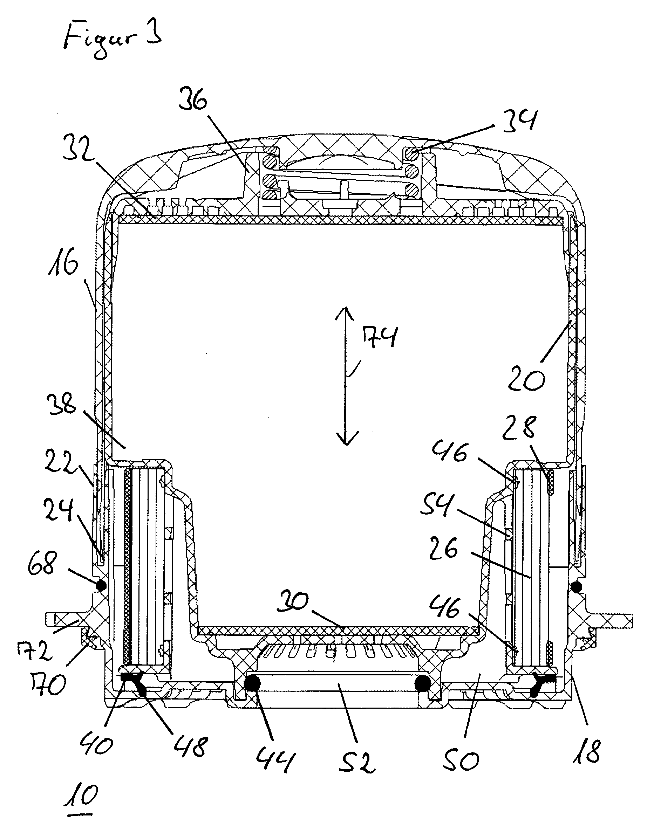

Figur 3 zeigt eine geschnittene Darstellung einer erfindungsgemäßen Lufttrocknerpatrone. Die Funktionsweise der in Figur 3 dargestellten erfindungsgemäßen Lufttrocknerpatrone 10 entspricht der aus Figur 1 bekannten Lufttrocknerpatrone 10. Anstelle der Bodenplatte 42, die über die Bördelnaht 56 mit dem Federdeckel 16 fest verbunden wird, tritt bei der dargestellten erfindungsgemäßen Ausführungsform ein Trägerelement 18, welches über Schnappverbindungen 22, 24 mit dem Federdeckel 16 gekoppelt wird. Die Schnappverbindungen 22, 24 bilden eine kraftformschlüssige Verbindung zwischen dem Federdeckel 16 und dem Trägerelement 18, wobei die einzelnen Elemente der Schnappverbindungen 22, 24 beispielsweise als Haken, Noppen oder Wülste an dem Federdeckel 16 und/oder dem Trägerelement 18 ausgebildet sein können und nach der Montage in entsprechende Vertiefungen oder Ausschnitte des jeweils anderen Teiles 18, 16 einrasten. Der Federdeckel 16 und das Trägerelement 18 stellen dabei über die Schnappverbindungen 22, 24 zu koppelnde Fügepartner dar, die während der Montage der Lufttrocknerpatrone 10 bis zum Einrasten der Schnappverbindungen 22, 24 in einer axialen Richtung 74 ineinander, beziehungsweise aufeinander zu, geschoben werden, wobei die verwendeten Haken, Noppen oder Wülste an den zugeordneten Vertiefungen beziehungsweise Ausnehmungen durch elastische Deformation der oder des Fügepartners und/oder den Haken, Noppen und Wülsten selbst vorbeigeführt wurden.

Federdeckel 16 und Trägerelement 18 werden dabei mit Hilfe der Schnappverbindungen 22, 24 zusammen geklippst. An dem Trägerelement 18 ist ein Vorsprung 72 angeordnet, der von einer ersten Abdichtung 68, die zwischen dem Trägerelement 18 und dem nicht dargestellten Patronengehäuse dichtet, und einer zweiten Abdichtung 70, die zwischen dem Trägerelement 18 und einem nicht dargestellten Gehäuse der Druckluftaufbereitungsanlage (EAC) dichtet, umgeben ist. Diese Anordnung kann beispielsweise zur Montage der Lufttrocknerpatrone 10 mit Hilfe eines nicht dargestellten Bajonettrings an der Druckluftaufbereitungsanlage 12 vorgesehen sein. Beide Abdichtungen 68, 70 stellen somit Dichtungen dar, die das Innere des Druckluftversorgungssystems, welches üblicherweise im Betrieb ein gegenüber der äußeren Umwelt erhöhtes Druckniveau aufweist, gegen die Umwelt abdichten. Der Federdeckel 16 und das Trägerelement 18 können insbesondere durch im Wesentlichen einseitig offene zylinderförmige Strukturen gebildet werden, wobei das Trägerelement 18 den Lufteinlass 50 und den Luftauslass 52 bereitstellt. Es ist jedoch auch denkbar, dass das Trägerelement 18 in nicht dargestellter Weise eher einem Kreisring gleicht, über den die Trockenmittelbox 20 gegen den Federdeckel 16 gepresst wird. In diesem Fall können der Lufteinlass 50 und der Luftauslass 52 direkt von der Trockenmittelbox 20 gebildet werden. Es ist ebenfalls möglich, dass das Trägerelement 18 einstückig mit der Trockenmittelbox 20 gefertigt ist. In diesem Fall würde der Federdeckel 16 "direkt" mit dem aus Trockenmittelbox 20 gekoppelt, da ein separates Trägerelement 18 entfallen würde beziehungsweise als Bestandteil der Trockenmittelbox 20 anzusehen wäre. Der Durchmesser des Federdeckels 16 senkrecht zur axialen Richtung 74 kann größer oder kleiner als der Durchmesser des Trägerelementes 18 beziehungsweise gewählt werden, um ein zumindest teilweises Ineinanderschieben von Federdeckel 16 und Trägerelement 18 bis zum "Einrasten", das heißt bis zum Schließen, der Schnappverbindungen 22, 24 zu ermöglichen. Es ist auch denkbar, dass der Durchmesser des Federdeckels 16 dem des Trägerelementes 18 entspricht, wobei dann beim Fügen die Schnappverbindungen 22, 24 an den aufeinander auftreffenden Rändern der Zylinderwände ineinander greifen, um die Verbindung herzustellen. Die Bauhöhe des Trägerelementes 18 in axialer Richtung 74 kann in einfacher Weise variiert werden. Im Folgenden wird die Herstellung der erfindungsgemäßen Lufttrocknerpatrone 10 kurz beschrieben.

Auf die Trockenmittelbox 20 wird das Koaleszenzfilter 26 gewickelt und mit der Manschette 28 fixiert. Der O-Ring 44 wird auf der Bodenseite der Trockenmittelbox 20 montiert. Anschließend wird der erste Luftfilter 30 von oben in die offene Trockenmittelbox 20 gelegt und die Trockenmittelbox mit einem granularen Trockenmittel 38 gefüllt. Der zweite Luftfilter 32 wird von oben auf das Trockenmittel 38 gelegt und durch den Granulatdeckel 36 nach oben abgedeckt, damit das Trockenmittel 38 nicht aus der Trockenmittelbox 20 herausrieseln kann. Um Relativbewegungen innerhalb des Trockenmittels 38 zu verhindern, wird der Granulatdeckel 36 durch die Druckfeder 34 gegenüber dem aufzusetzenden Federdeckel 16 verspannt und dabei auf das Trockenmittel 38 gepresst. Dies vermeidet eine mechanische Zertrümmerung des Granulats durch Vibrationen und ermöglicht zugleich die automatische Fixierung des Trockenmittels 38 bei einem durch Verschleiß sinkenden Füllstand innerhalb der Trockenmittelbox 20 durch das Absenken des Granulatdeckels 36. Anschließend wird das Trägerelement 18 mit dem Dichtring 40, der ersten Abdichtung 68 und der zweiten Abdichtung 70 bestückt. Die gefüllte, vormontierte Behälterbaugruppe, bestehend aus dem Federdeckel 16 und der gefüllten Trockenmittelbox 20, wird in das mit den Abdichtungen 68, 70 und dem Dichtring 40 bestückte Trägerelement 18 eingesetzt und über die Schnappverbindungen 22, 24 wird die Trockenmittelbox 20 zwischen dem Federdeckel 16 und dem Trägerelement 18 eingespannt. Alternativ ist auch denkbar, den Dichtring 40 an der Trockenmittelbox 20 zu befestigen. Wesentlich bei den beiden Anordnungsmöglichkeiten ist jeweils die Funktionsfähigkeit der Dichtlippe 48 als Sicherheitsventil, die bei Vorliegen eines Überdruckes in der Lufttrocknerpatrone 10 öffnet. Auf diese Weise ist auch ein Ausspülen abgeschiedener Öl- und Schmutzpartikel während einer Regenerationsphase der Lufttrocknerpatrone 10 unter Umgehung des Koaleszenzfilters 26 möglich.

Durch die Schnappverbindung 22, 24 kann die Lufttrocknerpatrone 10 innerhalb der Montage zwischengelagert oder transportiert werden, ohne dass die gesamte Baugruppe auseinander fällt und ohne dass Trockenmittel 38 herausrieselt. Durch eine entsprechende, nicht dargestellte Umverpackung kann diese Baugruppe auch auf Lager gelegt werden und im Servicefall zum leichten Austausch der Filterpatrone verwendet werden. Die Umverpackung dient dabei im Wesentlichen dem Schutz des Trockenmittels 38 vor Feuchtigkeit. Besonders vorteilhaft bei der erfindungsgemäßen Konstruktion ist, dass der Zusammenbau durch einfaches Zusammenführen von Federdeckel 16 und Trägerelement 18 erfolgen kann, wobei keine zusätzlichen Arbeitsschritte oder Werkzeuge erforderlich sind. Je nach Bedarf kann auf die Anordnung des Koaleszenzfilter 26 in der Lufttrocknerpatrone 10 verzichtet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Lufttrocknerpatrone
- 12: Druckluftaufbereitungsanlage
- 14: Fahrzeug
- 16: Federdeckel
- 18: Trägerelement
- 20: Trockenmittelbox
- 22: Schnappverbindung
- 24: Schnappverbindung
- 26: Koaleszenzfilter
- 28: Manschette
- 30: erster Luftfilter
- 32: zweiter Luftfilter
- 34: Druckfeder
- 36: Granulatdeckel
- 38: Trockenmittel
- 40: Dichtring
- 42: Bodenplatte
- 44: O-Ring
- 46: Luftleitelement
- 48: Gummilippe
- 50: Lufteinlass
- 52: Luftauslass
- 54: Tragekonstruktion
- 56: Bördelnaht
- 58: Lufttrockner
- 60: Ventileinrichtung
- 62: Entlüftung
- 64: Kompressor
- 66: Druckluftleitung
- 68: erste Abdichtung
- 70: zweite Abdichtung
- 72: Vorsprung
- 74: axiale Richtung

## Patentansprüche

1. Lufttrocknerpatrone (10) für eine Druckluftaufbereitungsanlage (12) eines Fahrzeugs (14), insbesondere eines Nutzfahrzeugs, mit
- einem Federdeckel (16) und einem Trägerelement (18), die gemeinsam im zusammengebauten Zustand der Lufttrocknerpatrone (10) ein Volumen der Lufttrocknerpatrone (10) definieren,
- wobei eine innerhalb des Volumens angeordnete, mit einem Trockenmittel (38) gefüllte Trockenmittelbox (20) vorgesehen ist, und
- wobei der Federdeckel (16) und das Trägerelement (18) als im Wesentlichen einseitig geschlossene Zylinder ausgeführt sind, an dessen offenen Enden Mittel beziehungsweise weitere Mittel zum Herstellen der Schnappverbindung (22, 24) angeordnet sind, über die der Federdeckel (16) und das Trägerelement (18) koppelbar sind,
**dadurch gekennzeichnet, dass** die Mittel zum Herstellen der Schnappverbindung (22, 24) an dem Federdeckel (16) von den weiteren Mitteln zum Herstellen der Schnappverbindung (22, 24) an dem Trägerelement (18) senkrecht zu einer axialen Richtung (74) beidseitig umfasst werden.

2. Lufttrocknerpatrone (10) nach Anspruch 1, **dadurch gekennzeichnet, dass** ein Koaleszenzfilter (26) auf die Trockenmittelbox (20) gewickelt und von einer Manschette (28) fixiert ist.

3. Lufttrocknerpatrone (10) nach Anspruch 1 oder 2, **dadurch gekennzeichnet, dass** an einem oberen und an einem unteren Ende der Trockenmittelbox (20) Luftfilter (30, 32) angeordnet sind.

4. Lufttrocknerpatrone (10) nach einem der vorhergehenden Ansprüche, **dadurch gekennzeichnet, dass** ein durch eine Druckfeder (34) gegenüber dem Federdeckel (16) verspannter Granulatdeckel (36) das Trockenmittel in der Trockenmittelbox (20) fixiert.

5. Lufttrocknerpatrone (10) nach einem der vorhergehenden Ansprüche, **dadurch gekennzeichnet, dass** das Trägerelement (18) und die Trockenmittelbox (20) einstückig gefertigt sind.

6. Druckluftaufbereitungsanlage (12) für ein Fahrzeug (14), insbesondere ein Nutzfahrzeug, mit einer Lufttrocknerpatrone (10) nach einem der vorhergehenden Ansprüche.

## Claims

1. Air dryer cartridge (10) for a compressed air treatment system (12) of a vehicle (14), in particular of a commercial vehicle, comprising
- a spring cover (16) and a support element (18) which together, in the assembled state of the air dryer cartridge (10), define a volume of the air dryer cartridge (10),
- wherein a desiccant box (20) is provided which is arranged within the volume and which is filled with a desiccant (38), and
- wherein the spring cover (16) and the support element (18) are designed as cylinders substantially closed off on one side, at the open ends of which are arranged means and/or further means respectively for producing the snap-action connection (22, 24) by means of which the spring cover (16) and the support element (18) can be coupled,
**characterised in that in that** the means for producing the snap-action connection (22, 24) on the spring cover (16) are encompassed at both sides, perpendicular to an axial direction (74), by the further means for producing the snap-action connection (22, 24) on the support element (18).

2. Air drier cartridge (10) according to claim 1, **characterised in that** a coalescence filter (26) is wound on the desiccant box (20) and is fixed by a sleeve (28).

3. Air drier cartridge (10) according to claim 1 or 2, **characterised in that** air filters (30, 32) are arranged on an upper end and on a lower end of the desiccant box (20).

4. Air drier cartridge (10) according to any of the preceding claims, **characterised in that** a granulate cover (36) which is braced with respect to the spring cover (16) by a compression spring (34) fixes the desiccant in the desiccant box (20).

5. Air drier cartridge (10) according to any of the preceding claims, **characterised in that** the support element (18) and the desiccant box (20) are produced in one piece.

6. Compressed air treatment system (12) for a vehicle (14), in particular a commercial vehicle, having an air dryer cartridge (10) according to any of the preceding claims.

## Revendications

1. Cartouche (10) de dessiccateur d'air pour une installation (12) de préparation d'air comprimé d'un véhicule (14), notamment d'un véhicule utilitaire, comprenant
- un couvercle (16) à ressort et un élément (18) formant support qui définissent ensemble, lorsque la cartouche (10) de dessiccateur d'air est à l'état monté, un volume de la cartouche (10) du dessiccateur d'air,
- dans laquelle il est prévu une boîte (20) disposée à l'intérieur du volume et emplie d'un agent (38) de dessiccation et
- dans laquelle le couvercle (16) à ressort et l'élément (18) formant support sont réalisés sous la forme d'un cylindre qui est fermé sensiblement d'un côté et à l'extrémité ouverte duquel sont disposés des moyens ou d'autres moyens de production d'un assemblage (22, 24) à enclenchement, par lequel le couvercle (16) à ressort et l'élément (18) formant support peuvent être accouplés,
**caractérisée en ce que** les moyens de production de l'assemblage (22, 24) à enclenchement sur le couvercle (16) à ressort sont pris des deux côtés perpendiculairement à une direction (74) axiale par les autres moyens de production de l'assemblage à enclenchement sur l'élément (18) formant support.

2. Cartouche (10) de dessiccateur d'air suivant la revendication 1, **caractérisée en ce qu'**un filtre (26) de coalescence est enroulé sur la boîte (20) d'agent de dessiccation et est immobilisé par une manchette (28).

3. Cartouche (10) de dessiccateur d'air suivant la revendication 1 ou 2, **caractérisée en ce que** des filtres (30, 32) à air sont montés sur une extrémité supérieure et sur une extrémité inférieure de la boîte (20) d'agent de dessiccation.

4. Cartouche (10) de dessiccateur d'air suivant l'une des revendications précédentes, **caractérisée en ce qu'**un couvercle (36) de granulés, bloqué par un ressort (34) de compression par rapport au couvercle (16) à ressort, immobilise l'agent de dessiccation dans la boîte (20) d'agent de dessiccation.

5. Cartouche (10) de dessiccateur d'air suivant l'une des revendications précédentes, **caractérisée en ce que** l'élément (18) formant support et la boîte (20) d'agent de dessiccation sont fabriqués d'une seule pièce.

6. Installation (12) de traitement d'air comprimé pour un véhicule (14), notamment pour un véhicule utilitaire, comprenant une cartouche d'air d'agent de dessiccation suivant l'une des revendications précédentes.
